(19) Europäisches Patentamt
European Patent Office
Office européen des brevets

(11) **EP 1 952 522 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **06804877.6**

(22) Anmeldetag: **16.11.2006**

(51) Int Cl.:
**H02M 7/219** (2006.01)     **H02M 1/12** (2006.01)

(86) Internationale Anmeldenummer:
**PCT/CH2006/000648**

(87) Internationale Veröffentlichungsnummer:
**WO 2007/056886 (24.05.2007 Gazette 2007/21)**

(54) **VERFAHREN ZUM BETRIEB EINER UMRICHTERSCHALTUNG SOWIE VORRICHTUNG ZUR DURCHFÜHRUNG DES VERFAHRENS**

METHOD FOR OPERATING A CONVERTER CIRCUIT AND DEVICE FOR CARRYING OUT THE METHOD

PROCEDE PERMETTANT DE FAIRE FONCTIONNER UN CIRCUIT CONVERTISSEUR, ET DISPOSITIF POUR LA MISE EN OEUVRE DE CE PROCEDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.11.2005 US 738065 P**

(43) Veröffentlichungstag der Anmeldung:
**06.08.2008 Patentblatt 2008/32**

(73) Patentinhaber: **ABB Schweiz AG**
**5400 Baden (CH)**

(72) Erfinder:
• **SERPA, Leonardo**
**CH-8057 Zürich (CH)**
• **KOLAR, Johann, Walter**
**CH-8044 Zürich (CH)**
• **ROUND, Simon, Douglas**
**CH-8049 Zürich (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**US-A1- 2006 215 425**

• **HERNANDEZ F ET AL: "A generalized control scheme for active front-end multilevel converters" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, Bd. VOL. 1 OF 3. CONF. 27, 29. November 2001 (2001-11-29), Seiten 915-920, XP010572900 ISBN: 0-7803-7108-9**
• **MALINOWSKI M ET AL: "A comparative study of control techniques for PWM rectifiers in AC adjustable speed drives" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, Bd. VOL. 1 OF 3. CONF. 27, 29. November 2001 (2001-11-29), Seiten 1114-1118, XP010572934 ISBN: 0-7803-7108-9**
• **LISERRE M ET AL: "Stability improvements of an LCL-filter based three-phase active rectifier" 33RD.ANNUAL IEEE POWER ELECTRONICS SPECIALISTS CONFERENCE. PESC 2002. CONFERENCE PROCEEDINGS. CAIRNS, QUEENSLAND, AUSTRALIA, JUNE 23 - 27, 2002, ANNUAL POWER ELECTRONICS SPECIALISTS CONFERENCE, NEW YORK, NY : IEEE, US, Bd. VOL. 2 OF 4. CONF. 33, 23. Juni 2002 (2002-06-23), Seiten 1195-1201, XP010595911 ISBN: 0-7803-7262-X**

EP 1 952 522 B1

- **YIFAN ZHAO ET AL: "FORCE COMMUTATED THREE LEVEL BOOST TYPE RECTIFIER" IEEE TRANSACTIONS ON INDUSTRY APPLICATIONS, IEEE SERVICE CENTER, PISCATAWAY, NJ, US, Bd. 31, Nr. 1, Januar 1995 (1995-01), Seiten 155-161, XP000503159 ISSN: 0093-9994

## Beschreibung

## Technisches Gebiet

Die Erfindung bezieht sich auf das Gebiet der Leistungselektronik. Sie geht aus von einem Verfahren zum Berieb einer Umrichterschaltung sowie einer Vorrichtung zur Durchführung des Verfahrens gemäss dem Oberbegriff der unabhängigen Ansprüche.

## Stand der Technik

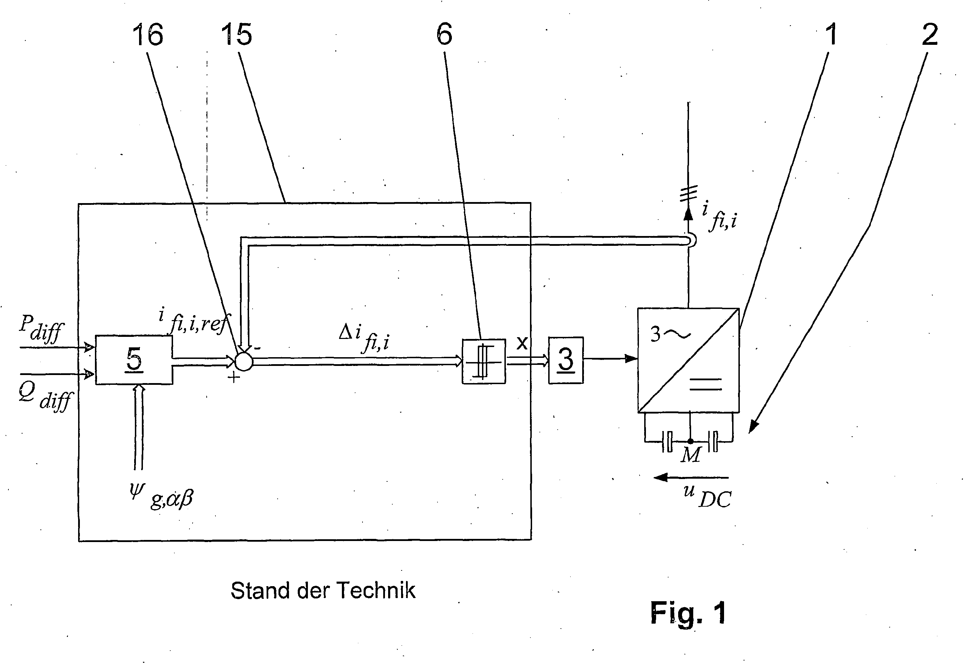

Herkömmliche Umrichterschaltungen umfassen eine Umrichtereinheit mit einer Vielzahl an ansteuerbaren Leistungshalbleiterschaltern, welche in bekannter Weise zur Schaltung von mindestens zwei Schalspannungsniveaus verschaltet sind. An jedem Phasenanschluss der Umrichtereinheit kann zudem beispielsweise ein LCL-Filter angeschlossen sein. In Fig. 1 ist eine Ausführungsform einer Vorrichtung zur Durchführung eines Verfahrens zum Betrieb einer Umrichterschaltung nach dem Stand der Technik gezeigt. Darin weist die Umrichterschaltung eine Umrichtereinheit 1 auf. Mit der Umrichtereinheit 1 gemäss Fig. 1 ist ein Energiespeicherkreis 2 verbunden, welcher gängigerweise durch zwei in Serie geschaltete Kondensatoren gebildet ist. Für den Betrieb der Umrichterschaltung ist eine Vorrichtung vorgesehen, welche eine Regelungseinrichtung 15 zur Erzeugung eines Hysteresesignalvektors x aufweist, die über eine Ansteuerschaltung 3 zur Bildung eines Ansteuersignals S aus dem Hysteresesignalvektor x mit den ansteuerbaren Leistungshalbleiterschaltern der Umrichtereinheit 1 verbunden ist. Mittels des Ansteuersignals S werden somit die Leistungshalbleiterschalter angesteuert. Der Hysteresesignalvektor x wird mittels eines Hysteresereglers 6 aus einem Differenzphasenanschlussstromvektor $\Delta i_{fi,i}$ gebildet. Der Differenzphasenanschlussstromvektor $\Delta i_{fi,i}$ wiederum wird aus der Subtraktion eines Phasenanschlussstromvektors $i_{fi,i}$ von einem Referenzphasenanschlussstromvektor $i_{fi,i,ref}$ gebildet, wobei der Referenzphasenanschlussstromvektor $i_{fi,i,ref}$ mittels einer ersten Berechnungseinheit 5 aus einem Referenzwirkleistungswert $P_{ref}$, einem Referenzblindleistungswert $Q_{ref}$ und einem Phasenflussvektor $\psi_{g,\alpha\beta}$ gebildet wird.

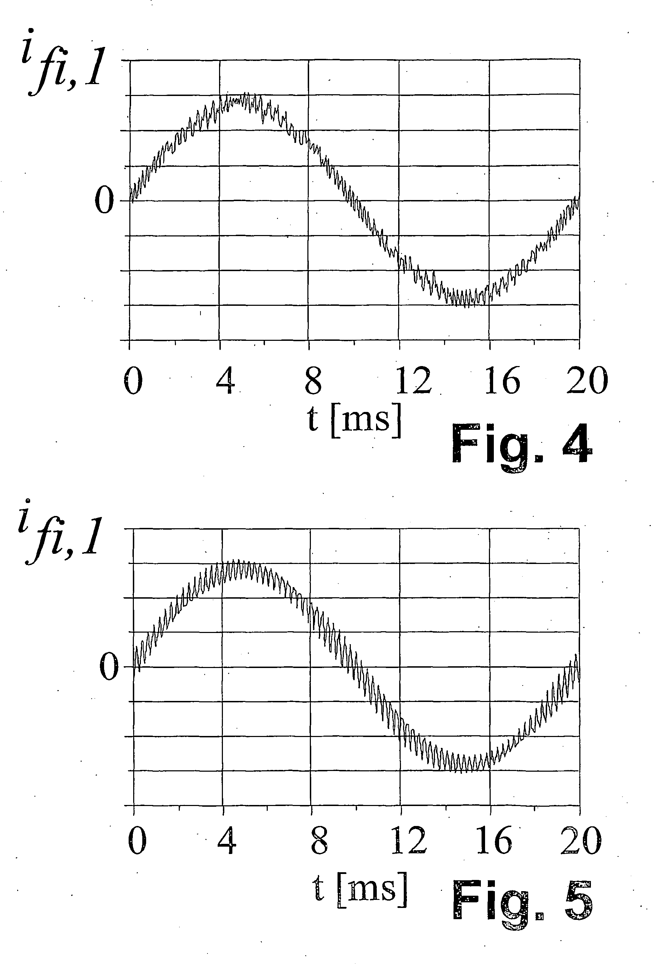

Problematisch bei einem vorstehend genannten Verfahren zum Betrieb einer Umrichterschaltung ist, dass durch die Bildung des Referenzphasenanschlussstromvektors $i_{fi,i,ref}$ aus dem Referenzwirkleistungswert $P_{ref}$, aus dem Referenzblindleistungswert $Q_{ref}$ und aus dem Phasenflussvektor $\psi_{g,\alpha\beta}$ die Schaltfrequenz der Leistungshalbleiterschalter sehr stark variiert. Durch eine solche hochgradig variable Schaltfrequenz erhöhen sich die Oberschwingungen in den Phasenanschlussströmen $i_{fg,i}$ und in den Phasenanschlussspannungen $u_{inv,i}$ der Umrichtereinheit signifikant. In Fig. 4 ist dazu ein entsprechender zeitlicher Verlauf eines stark oberschwingungsbehafteten Phasenanschlussstromes $i_{fg,1}$ für eine Phase dargestellt. Bei Anschluss der Umrichterschaltung beispielsweise an ein elektrisches Verbundnetz sind solche hohen Oberschwingungsanteile nicht erwünscht bzw. nicht zugelassen. Bei Anschluss der Umrichterschaltung beispielsweise an eine elektrische Last können solche Oberschwingungen zu Beschädigungen oder gar Zerstörungen führen und sind damit in höchstem Masse unerwünscht.

Als Stand der Technik sind die Dokumente "A Comparative Study of Control Techniques for PWM rectifiers in AC Adjustable Speed Drivers", Malinowski, Trzynadlowski, und "A Generalized Control Scheme for active front-end multilevel converters", Hernandez, Morán genannt.

## Darstellung der Erfindung

Aufgabe der Erfindung ist es deshalb, ein Verfahren zum Betrieb einer Umrichterschaltung anzugeben, mittels welchem die Schaltfrequenz von ansteuerbaren Leistungshalbleiterschaltern einer Umrichtereinheit der Umrichterschaltung nahezu konstant gehalten werden kann.

Ferner ist es die Aufgabe der Erfindung, eine Vorrichtung anzugeben, mit der das Verfahren in besonders einfacher Weise durchgeführt werden kann.

Diese Aufgaben werden durch die Merkmale des Anspruchs 1 bzw. des Anspruchs 9 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern und einen durch zwei in Serie geschaltete Kondensatoren gebildeten Energiespeicherkreis auf. Beim erfindungsgemässen Verfahren zum Betrieb der Umrichterschaltung werden nun die ansteuerbaren Leistungshalbleiterschalter mittels eines aus einem Hysteresesignalvektor gebildeten Ansteuersignals angesteuert, wobei der Hysteresesignalvektor aus einem Differenzphasenanschlussstromvektor mittels eines Hysteresereglers gebildet wird und der Differenzphasenanschlussstromvektor aus der Subtraktion eines Phasenanschlussstromvektors von einem Referenzphasenanschlussstromvektor gebildet wird. Der Referenzphasenanschlussstromvektor wird zudem aus einem Referenzwirkleistungswert, einem Referenzblindleistungswert und einem Phasenflussvektor gebildet. Erfindungsgemäss wird zur Bildung des Differenzphasenanschlussstromvektor zusätzlich ein Stromkorrekturwert subtrahiert, wobei der Stromkorrekturwert durch Integration eines Phasenanschlussspannungsmittelwertes gebildet wird der Phasenanschlussspannungsmittelwert durch Ermittlung des arithmetischen Mittelwertes der Phasenanschlussspannungen mit Bezugspunkt des Verbindungspunktes der Kondensatoren des Energiespeicherkreis gebildet wird. Der derart gebildete Stromkorrekturwert bewirkt, dass die Schaltfrequenz der ansteuerbaren Leistungshalbleiterschaltern der Umrichtereinheit mit Vorteil nahezu konstant gehalten werden kann. Durch die weitestgehend konstante Schaltfrequenz wiederum lassen sich Oberschwingungen den Phasenanschlussströmen und in den Phasenanschlussspannungen der Umrichtereihheit vorteilhaft gering halten.

Die erfindungsgemässe Vorrichtung zur Durchführung des Verfahrens zum Betrieb der Umrichterschaltung weist eine der Erzeugung eines Hysteresesignalvektors dienende Regelungseinrichtung auf, die über eine Ansteuerschaltung zur Bildung des Ansteuersignals mit den ansteuerbaren Leistungshalbleiterschaltern verbunden ist, wobei die Regelungseinrichtung einen Hystereseregler zur Bildung des Hysteresesignalvektors aus dem Differenzphasenanschlussstromvektor, einen ersten Summierer zur Bildung des Differenzphasenanschlussstromvektor aus der Subtraktion des Phasenanschlussstromvektors von dem Referenzphasenanschlussstromvektor und eine erste Berechnungseinheit zur Bildung des Referenzphasenanschlussstromvektors aus dem Referenzwirkleistungswert, dem Referenzblindleistungswert und dem Phasenflussvektor aufweist. Ferner ist dem ersten Summierer zur Bildung des Differenzphasenanschlussstromvektors zusätzlich der Stromkorrekturwert zur Bildung des Differenzphasenanschlussstromvektors aus der Subtraktion des Phasenanschlussstromvektors und des Stromkorrekturwertes von dem Referenzphasenanschlussstromvektor zugeführt. Darüber hinaus umfasst die Regelungseinrichtung einen Integrierer zur Bildung des Stromkorrekturwertes durch Integration eines Phasenanschlussspannungsmittelwertes und einen Mittelwertbilder zur Bildung des Phasenanschlussspannungsmittelwertes durch Ermittlung des arithmetischen Mittelwertes der Phasenanschlussspannungen mit Bezugspunkt des Verbindungspunktes der Kondensatoren des Energiespeicherkreises.

Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1 eine Ausführungsform einer Vorrichtung zur Durchführung eines Verfahrens zum Betrieb einer Umrichterschaltung nach dem Stand der Technik,

Fig. 2 eine erste Ausführungsform einer erfindungsgemässen Vorrichtung zur Durch- führung des erfindungsgemässen Verfahrens zum Betrieb der Umrichterschal- tung,

Fig. 3 eine zweite Ausführungsform einer erfindungsgemässen Vorrichtung zur Durchführung des erfindungsgemässen Verfahrens zum Betrieb der Umricht- erschaltung,

Fig. 4 ein zeitlicher Verlauf eines Phasenanschlussstromes für eine Phase bei einem Verfahren zum Betrieb der Umrichterschaltung nach dem Stand der Technik,

Fig. 5 ein zeitlicher Verlauf des Phasenanschlussstromes für eine Phase nach dem erfindungsgemässen Verfahren und

Fig. 6 eine Ausführungsform einer fünften Berechnungseinheit.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

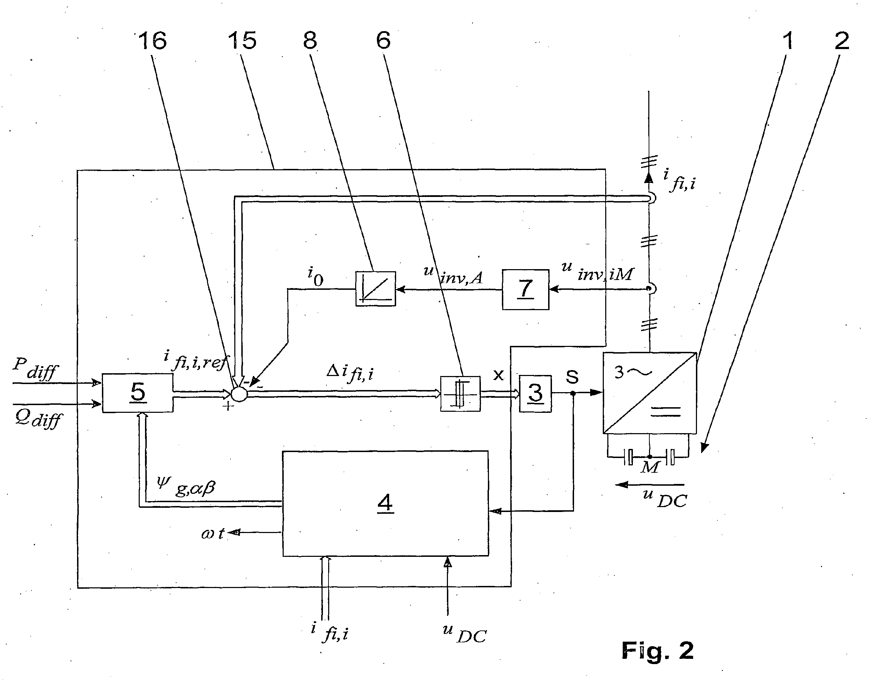

In Fig. 2 ist eine erste Ausführungsform einer erfindungsgemässen Vorrichtung zur Durchführung des erfindungsgemässen Verfahrens zum Betrieb einer Umrichterschaltung gezeigt. Die Umrichterschaltung weist gemäss Fig. 2 eine Umrichtereinheit 1 mit einer Vielzahl an ansteuerbaren Leistungshalbleiterschaltern und einen durch zwei in Serie geschaltete Kondensatoren gebildeten Energiespeicherkreis 2 auf. In Fig. 2 ist die Umrichtereinheit 1 beispielhaft dreiphasig ausgeführt. Es sei erwähnt, dass die Umrichtereinheit 1 allgemein als jedwede Umrichtereinheit 1 zur Schaltung von $\geq 2$ Schaltspannungsniveaus (Multi-Level-Umrichterschaltung) bezüglich der Spannung des mit der Umrichtereinheit 1 verbundenen Energiespeicherkreises 2 ausgebildet sein kann.

Beim erfindungsgemässen Verfahren zum Betrieb der Umrichterschaltung werden nun die ansteuerbaren Leistungshalbleiterschalter der Umrichtereinheit 1 mittels eines aus einem Hysteresesignalvektor x gebildeten Ansteuersignals S angesteuert. Zur Bildung des Ansteuersignals S dient gängigerweise eine Zuordnungstabelle (look-up table), bei welcher Hysteresesignalvektoren x entsprechenden Ansteuersignalen S fest zugeordnet sind, oder ein Modulator, welcher auf der Pulsweitenmodulation basiert. Es sei erwähnt, dass sämtliche Vektoren mit dem Index i Vektorkomponenten entsprechend der Anzahl i Phasen aufweisen, d.h. bei i=3 Phasen weisen die entsprechenden Vektoren auch i=3 Vektorkomponenten auf. Der Hysteresesignalvektor x wird ferner aus einem Differenzphasenanschlussstromvektor $\Delta i_{fi,i}$ mittels eines Hysteresereglers 6 gebildet und der Differenzphasenanschlussstromvektor $\Delta i_{fi,i}$ wiederum wird aus der Subtraktion eines Phasenanschlussstromvektors $i_{fi,i}$ von einem Referenzphasenanschlussstromvektor $i_{fi,i,ref}$ gebildet, wobei der Referenzphasenanschlussstromvektor $i_{fi,i,ref}$ aus einem Differenzwirkleistungswert $P_{diff}$, einem Differenzblindleistungswert $Q_{diff}$ und einem Phasenflussvektor $\psi_{g,\alpha\beta}$ gebildet wird. Die Vektorkomponenten des Phasenanschlussstromvektors $i_{fi,i}$ werden typischerweise mittels Stromsensoren an den entsprechenden Phasenanschlüssen der Umrichtereinheit 1 gemessen. Erfindungsgemäss wird zur Bildung des Differenzphasenanschlussstromvektor $\Delta i_{fi,i}$ zusätzlich ein Stromkorrekturwert $i_0$ subtrahiert und der Stromkorrekturwert $i_0$ wird durch Integration eines Phasenanschlussspannungsmittelwertes $u_{inv,A}$ gebildet, wobei der Phasenanschlussspannungsmittelwert $u_{inv,A}$ durch Ermittlung des arithmetischen Mittelwertes der Phasenanschlussspannungen $u_{inv,iM}$ mit Bezugspunkt des Verbindungspunktes M der Kondensatoren des Energiespeicherkreis 2 gebildet wird. Der Stromkorrekturwert $i_0$ bewirkt, dass die Schaltfrequenz der ansteuerbaren Leistungshalbleiterschaltern der Umrichtereinheit 1 mit Vorteil nahezu konstant gehalten werden kann. Durch die weitestgehend konstante Schaltfrequenz wiederum lassen sich Oberschwingungen in den Phasenanschlussströmen $i_{fi,i}$ und in den Phasenanschlussspannungen $u_{inv,i}$ der Umrichtereinheit 1 vorteilhaft gering halten. In Fig. 5 ist dazu ein zeitlicher Verlauf des Phasenanschlussstromes $i_{fi,1}$ für eine Phase nach dem erfindungsgemässen Verfahren dargestellt, wobei eine deutliche Verringerung der Oberschwingungen im Verlauf gegenüber dem Verlauf nach Fig. 4 bei einem herkömmlichen Verfahren zu erkennen ist.

Der Phasenflussvektor $\psi_{g,\alpha\beta}$ wird vorzugsweise aus dem Phasenanschlussstromvektor $i_{fi,i}$, aus dem Ansteuersignal S und aus einem aktuellen Gleichspannungswert $u_{DC}$ des Energiespeicherkreises 2 gebildet. Darauf wird nachfolgend detailliert eingegangen. Es sei erwähnt, dass sämtliche Vektoren mit dem Index $\alpha\beta$ als Vektorkomponenten eine $\alpha$-Komponente der Raumzeigertransformation der entsprechenden Grösse und eine $\beta$-Komponente der Raumzeigertransformation der entsprechenden Grösse aufweisen.

Die Raumzeigertransformation ist allgemein wie folgt definiert

$$\overline{y} = y_\alpha + jy_\beta$$

und

$$y_\alpha = \sqrt{\frac{2}{3}}\left(y_1 - \frac{1}{2}y_2 + y_3\right)$$

$$y_\beta = \sqrt{\frac{1}{2}}(y_2 - y_3)$$

wobei $\overline{y}$ eine komplexe Grösse, $y_\alpha$ die $\alpha$-Komponente der Raumzeigertransformation der Grösse $\overline{y}$ und $y_\beta$ die $\beta$-Komponente der Raumzeigertransformation der Grösse $\overline{y}$ ist und $y_1$, $y_2$, $y_3$ Vektorkomponenten des zu der komplexen Grösse $\overline{y}$ zugehörigen Vektors y sind. Sämtliche bereits erwähnte und nachfolgend noch erwähnte Raumzeigertransformationen von Grössen werden nach vorstehend genannten Formeln erzeugt, wobei die Erzeugung separat in einer speziell dafür vorgesehenen Berechnungseinheit oder aber in der Berechnungseinheit, in welcher die entsprechende $\alpha$-Komponente und $\beta$-Komponente für eine Berechnung einer anderen Grösse benötigt wird, erfolgen kann.

Der Phasenfluss $\psi_g$ ergibt sich in komplexer Schreibweise allgemein zu

$$\overline{\psi}_g = \int \overline{u}_{inv} \cdot dt - L_g \cdot i_{fi,i}$$

wobei

$$u_{inv,\alpha} = \sqrt{\frac{2}{3}}u_{DC} \cdot f_1(S)$$

und

$$u_{inv,\beta} = \sqrt{\frac{1}{2}}u_{DC} \cdot f_2(S)$$

und $L_g$ eine Netzinduktivität ist und $f_1(S)$, $f_2(S)$ vorgebbare Schaltfunktionen des Ansteuersignals S sind. Mit den vorstehend genanten Formeln lässt sich damit der Phasenflussvektor $\psi_{g,\alpha\beta}$, d.h. insbesondere seine Komponenten $\psi_{g,\alpha}$, $\psi_{g,\beta}$, sehr einfach bilden.

Nach der Ausführungsform gemäss Fig. 2 entspricht der Differenzwirkleistungswert $P_{diff}$ einem vorgebbaren Referenzwirkleistungswert $P_{ref}$ und der Differenzblindleistungswert $Q_{diff}$ einem vorgebbaren Referenzblindleistungswert $Q_{ref}$.

Bei der Vorrichtung nach Fig. 2 weist die Regelungseinrichtung 15 neben besagtem Hystereseregler 6 zur Bildung des Hysteresesignalvektors x aus dem Differenzphasenanschlussstromvektor $\Delta i_{fi,i}$ auch einen ersten Summierer 16 zur Bildung des Differenzphasenanschlussstromvektor $\Delta i_{fi,i}$ aus der Subtraktion des Phasenanschlussstromvektors $i_{fi,i}$ von dem Referenzphasenanschlussstromvektor $i_{fi,i,ref}$ und eine erste Berechnungseinheit 5 zur Bildung des Referenzphasenanschlussstromvektors $i_{fi,i,ref}$ aus dem Differenzwirkleistungswert $P_{diff}$, dem Differenzblindleistungswert $Q_{diff}$ und einem Phasenflussvektor $\psi_{g,\alpha\beta}$ auf. Erfindungsgemäss ist dem ersten Summierer 16 zur Bildung des Differenzphasenanschlussstromvektor $\Delta i_{fi,i}$ zusätzlich der Stromkorrekturwert $i_0$ zur Bildung des Differenzphasenanschlussstromvektors $\Delta i_{fi,i}$ aus der Subtraktion des Phasenanschlussstromvektors $i_{fi,i}$ und des Stromkorrekturwertes $i_0$ von dem Referenzphasenanschlussstromvektor $i_{fi,i,ref}$ zugeführt. Desweiteren umfasst Regelungseinrichtung 15 gemäss Fig. 2 erfindungsgemäss einen Integrierer 8 zur Bildung des Stromkorrekturwertes $i_0$ durch Integration des Phasenanschlussspannungsmittelwertes $u_{inv,A}$ und einen Mittelwertbilder 7 zur Bildung des Phasenanschlussspannungsmittelwertes $u_{inv,A}$ durch Ermittlung des arithmetischen Mittelwertes der Phasenanschlussspannungen $u_{inv,iM}$ mit Bezugspunkt des Verbindungspunktes M der Kondensatoren des Energiespeicherkreises 2. Damit ist die erfindungsgemässe Vorrichtung zur Durchführung des Verfahrens zum Betrieb der Umrichterschaltung sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren demnach besonders einfach durchführbar.

Gemäss Fig. 2 weist die Regelungseinrichtung 15 eine zweite Berechnungseinheit 4 zur Bildung des Phasenflussvektors $\psi_{g,\alpha\beta}$ aus dem Phasenanschlussstromvektor $i_{fi,i}$, aus dem Ansteuersignal S und aus dem aktuellen Gleichspannungswert $u_{DC}$ des Energiespeicherkreises 2 auf.

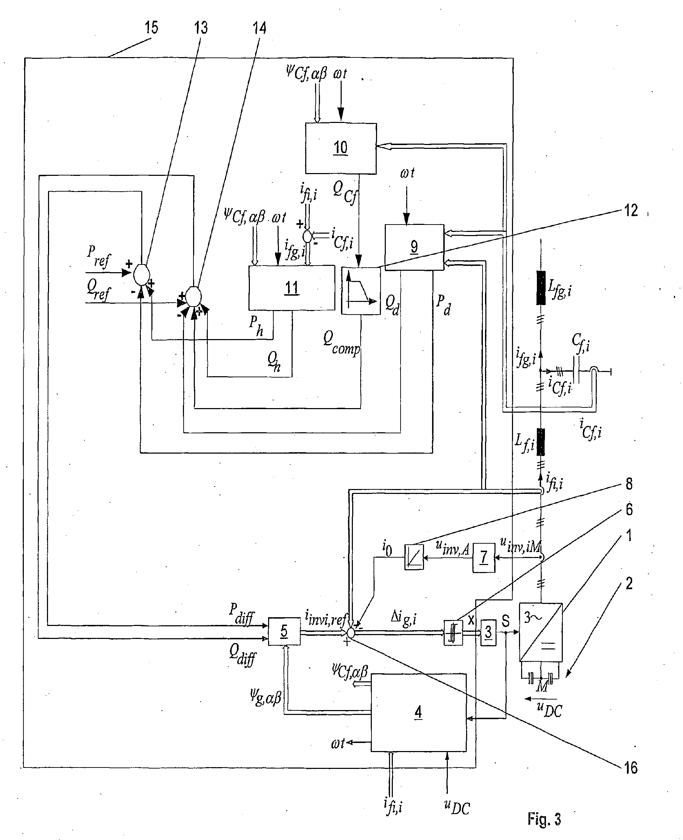

In Fig. 3 ist eine zweite Ausführungsform einer erfindungsgemässen Vorrichtung zur Durchführung des erfindungsgemässen Verfahrens zum Betrieb der Umrichterschaltung gezeigt. Darin ist an jedem Phasenanschluss der Umrichtereinheit 1 ein LCL-Filter $L_{f,i}$, $C_{fi}$, $L_{fg,i}$ angeschlossen. Der Index i steht wiederum für die Anzahl von i Phasen. Demnach weist jedes LCL-Filter eine erste Filterinduktivität $L_f$, eine zweite Filterinduktivität $L_{fg}$ sowie eine Filterkapazität $C_f$ auf, wobei die erste Filterinduktivität $L_f$ mit dem zugehörigen Phasenanschluss der Umrichtereinheit 1, mit der zweiten Filterinduktivität $L_{fg}$ und mit der Filterkapazität $C_f$ verbunden ist. Weiterhin sind die Filterkapazitäten $C_f$ der einzelnen LCL-Filter miteinander verbunden.

Verfahrensmässig wird bei der Ausführungsform nach Fig. 3 der Differenzwirkleistungswert $P_{diff}$ aus der Subtraktion eines Dämpfungswirkleistungswertes $P_d$ von der Summe aus einem Referenzwirkleistungswert $P_{ref}$ und mindestens einem Kompensationsoberschwingungswirkleistungswert $P_h$ bezüglich der Grundschwingung des Filterausgangsstromvektors $i_{fg,i}$ der LCL-Filter gebildet, wobei der Dämpfungswirkleistungswert $P_d$ aus einer mit einem einstellbaren Dämpfungsfaktor $k_d$ gewichteten Summe von einer Multiplikation einer $\alpha$-Komponente der Raumzeigertransformation von Filterkapazitätsströmen $i_{Cf\alpha}$ der LCL-Filter mit einer $\alpha$-Komponente der Raumzeigertransformation $i_{fi\alpha}$ der Komponenten des Phasenanschlussstromvektors $i_{fi,i}$ und einer Multiplikation einer $\beta$-Komponente der Raumzeigertransformation von Filterkapazitätsströmen $i_{Cf\beta}$ der LCL-Filter mit einer $\beta$-Komponente der Raumzeigertransformation $i_{fi\beta}$ der Komponenten des Phasenanschlussstromvektors $i_{fi,i}$ gebildet wird. Der Differenzblindleistungswert $Q_{diff}$ wird ferner aus der Subtraktion von der Summe aus einem Referenzblindleistungswert $Q_{ref}$ und mindestens einem Kompensationsoberschwingungsblindleistungswert $Q_h$ bezüglich der Grundschwingung des Filterausgangsstromvektors $i_{fg,i}$ der LCL-Filter gebildet, wobei der Dämpfungsblindleistungswert $Q_d$ aus einer mit dem einstellbaren Dämpfungsfaktor $k_d$ gewichteten Differenz von einer Multiplikation der $\beta$-Komponente der Raumzeigertransformation von Filterkapazitätsströmen $i_{Cf\beta}$ der LCL-Filter mit der $\alpha$-Komponente der Raumzeigertransformation $i_{fi\alpha}$ der Komponenten des Phasenanschlussstromvektors $i_{fi,i}$ und einer Multiplikation der $\alpha$-Komponente der Raumzeigertransformation von Filterkapazitätsströmen $i_{Cf\alpha}$ der LCL-Filter mit der $\beta$-Komponente der Raumzeigertransformation $i_{fi\beta}$ der Komponenten des Phasenanschlussstromvektors $i_{fi,i}$ gebildet wird. Gemäss Fig. 3 werden die Filterkapazitätsströme mittels Stromsensoren an den entsprechenden Filterkapazitäten $C_{f,i}$ gemessen und sind Vektorkomponenten des in Fig. 3 dargestellten Filterkapazitätsstromvektors $i_{Cf,i}$.

Die Bildung des Dämpfungswirkleistungswert $P_d$ verläuft nach folgender Formel

$$P_d = k_d \cdot (i_{Cf\alpha} \cdot i_{fi\alpha} + i_{Cf\beta} \cdot i_{fi\beta})$$

Der Referenzwirkleistungswert $P_{ref}$ nach Fig. 3 ist frei einstellbar und ist der Sollwert der Wirkleistung, welche am Ausgang der LCL-Filter anliegen soll.

Die Bildung des Dämpfungsblindleistungswert $Q_d$ verläuft nach folgender Formel

$$Q_d = k_d \cdot (i_{Cf\beta} \cdot i_{fi\alpha} - i_{Cf\alpha} \cdot i_{fi\beta})$$

Der Referenzblindleistungswert $Q_{ref}$ nach Fig. 3 ist frei einstellbar und ist der Sollwert der Blindleistung, welche am Ausgang der LCL-Filter anliegen soll.

Es sei erwähnt, dass die Bildung des Dämpfungswirkleistungswertes $P_d$ und des Dämpfungsblindleistungswertes $Q_d$ vermieden werden kann, indem lediglich aus der α-Komponente der Raumzeigertransformation von Filterkapazitätsströmen $i_{Cf\alpha}$ der LCL-Filter und aus der β-Komponente der Raumzeigertransformation von Filterkapazitätsströmen $i_{Cf\beta}$ der LCL-Filter durch geeignete Filterung ein Dämpfungsstromvektor berechnet wird, der dann direkt in die Bildung des Referenzphasenanschlussstromvektors $i_{fi,i,ref}$ und damit in die Bildung des des Differenzphasenanschlussstromvektor $\Delta i_{fi,i}$ eingeht. Damit einher geht eine Rechenzeitersparnis, da die Berechnung des Dämpfungswirkleistungswertes $P_d$ und des Dämpfungsblindleistungswertes $Q_d$ vorteilhaft entfallen kann.

Durch den Dämpfungswirkleistungswert $P_d$ und den Dämpfungsblindleistungswert $Q_d$ können vorteilhaft Verzerrungen, d.h. unerwünschte Schwingungen, in den Filterausgangsströmen $i_{fg,i}$ und Filterausgangsspannungen aktiv gedämpft werden, so dass diese Verzerrungen stark reduziert werden und bestenfalls weitestgehend unterdrückt werden. Ein weiterer Vorteil liegt darin, dass kein diskreter, platzraubender, aufwendig realisierter und damit teurer Dämpfungswiderstand an den jeweiligen Phasenanschluss angeschlossen werden muss, um die unerwünschten Verzerrungen effektiv dämpfen zu können. Die Addition beziehungsweise Aufschaltung mindestens eines Kompensationsoberschwingungswirkleistungswertes, $P_h$ zur Bildung des Differenzwirkleistungswertes $P_{diff}$ und mindestens eines Kompensatiohsoberschwingungsblindleistungswertes $Q_h$ zur Bildung des Differenzblindleistungswertes $Q_{diff}$ bewirkt mit Vorteil eine aktive Verringerung von Oberschwingungen und damit insgesamt eine weitere Verbesserung in der Reduzierung von Oberschwingungen.

Gemäss Fig. 3 weist die Regelungseinrichtung 15 einen zweiten Summierer 13 zur Bildung des Differenzwirkleistungswertes $P_{diff}$ aus der Subtraktion des Dämpfungswirkleistungswertes $P_d$ von der Summe aus einem Referenzwirkleistungswert $P_{ref}$ und mindestens einem Kompensationsoberschwingungswirkleistungswert $P_h$ bezüglich der Grundschwingung des Filterausgangsstromvektors $i_{fg,i}$ der LCL-Filter auf, wobei die Regelungseinrichtung 15 eine dritte Berechnungseinheit 9 zur Bildung des Dämpfungswirkleistungswertes $P_d$ aus der mit einem einstellbaren Dämpfungsfaktor $k_d$ gewichteten Summe von einer Multiplikation der α-Komponente der Raumzeigertransformation von Filterkapazitätsströmen $i_{Cf\alpha}$ der LCL-Filter mit der α-Komponente der Raumzeigertransformation $i_{fi\alpha}$ der Komponenten des Phasenanschlussstromvektors $i_{fi,i}$ und der Multiplikation der β-Komponente der Raumzeigertransformation von Filterkapazitätsströmen $i_{Cf\beta}$ der LCL-Filter mit der β-Komponente der Raumzeigertransformation $i_{fi\beta}$ der Komponenten des Phasenanschlussstromvektors $i_{fi,i}$ aufweist. Zudem umfasst die Regelungseinrichtung 15 einen dritten Summierer 14 zur Bildung des Differenzblindleistungswertes $Q_{diff}$ aus der Subtraktion von der Summe aus einem Referenzblindleistungswert $Q_{ref}$ und mindestens einem Kompensationsoberschwingungsblindleistungswert $Q_h$ bezüglich der Grundschwingung des Filterausgangsstromvektors $i_{fg,i}$ der LCL-Filter, wobei die dritte Berechnungseinheit 9 zusätzlich der Bildung des Dämpfungsblindleistungswertes $Q_d$ aus einer mit dem einstellbaren Dämpfungsfaktor $k_d$ gewichteten Differenz von einer Multiplikation der β-Komponente der Raumzeigertransformation von Filterkapazitätsströmen $i_{Cf\beta}$ der LCL-Filter mit der α-Komponente der Raumzeigertransformation $i_{fi\alpha}$ der Komponenten des Phasenanschlussstromvektors $i_{fi,i}$ und einer Multiplikation der α-Komponente der Raumzeigertransformation von Filterkapazitätsströmen $i_{Cf\alpha}$ der LCL-Filter mit der β-Komponente der Raumzeigertransformation $i_{fi\beta}$ der Komponenten des Phasenanschlussstromvektors $i_{fi,i}$ dient. Es ist auch denkbar, dass der Dämpfungswirkleistungswert $P_d$ und der Dämpfungsblindleistungswert $Q_d$ lediglich aus der α-Komponente der Raumzeigertransformation von Filterkapazitätsströmen $i_{Cf\alpha}$ der LCL-Filter mit einer α-Komponente der Raumzeigertransformation $i_{fi\alpha}$ der Komponenten des Phasenanschlussstromvektors $i_{fi,l}$ und einer Multiplikation einer β-Komponente der Raumzeigertransformation von Filterkapazitätsströmen $i_{Cf\beta}$ der LCL-Filter

Gemäss Fig. 3 wird zur Bildung des Differenzblindleistungswertes $Q_{diff}$ zusätzlich ein Kompensationsblindleistungswert $Q_{comp}$ addiert, wobei der Kompensationsblindleistungswert $Q_{comp}$ durch Tiefpassfilterung eines geschätzten Filterkapazitätsblindleistungswertes $Q_{Cf}$ gebildet wird. Somit wird vorteilhaft vermieden, dass unerwünschte Blindleistungsanteile der LCL-Filter, insbesondere der Filterkapazitäten $C_{f,i}$ der LCL-Filter, am Ausgang der LCL-Filter anliegen, so dass sichergestellt werden kann, dass sich am Ausgang der LCL-Filter nur ein Blindleistungswert entsprechend dem eingestellten Referenzblindleistungswert $Q_{ref}$ einstellt. Dem dritten Summierer ist gemäss Fig. 3 zur Bildung des Differenzblindleistungswertes $Q_{diff}$ zusätzlich der Kompensationsblindleistungswert $Q_{comp}$ zugeführt, wobei der Kompensationsblindleistungswert $Q_{comp}$ durch Tiefpassfilterung eines geschätzten Filterkapazitätsblindleistungswertes $Q_{Cf}$ mittels eines Tiefpassfilters 12 gebildet ist. Der geschätzte Filterkapazitätsblindleistungswert $Q_{Cf}$ wird ferner aus der α-Komponente der Raumzeigertransformation der Filterkapazitätsströme $i_{Cf\alpha}$, aus der β-Komponente der Raumzeigertransformation der Filterkapazitätsströme $i_{Cf\beta}$, aus einem geschätzten Filterkapazitätsflussvektor $\psi_{Cf,\alpha\beta}$ und aus dem Grundschwingungswinkel $\omega t$ bezüglich der Grundschwingung des Filterausgangsstromvektors $i_{fg,i}$ gebildet, was insbesondere nachfolgende Formel verdeutlicht.

$$Q_{Cf} = \omega \cdot (\psi_{Cf\alpha} \cdot i_{Cf\alpha} + \psi_{Cf\beta} \cdot i_{Cf\beta})$$

Die Regelungseinrichtung 15 weist zur Bildung des geschätzten Filterkapazitätsblindleistungswertes

$Q_{Cf}$ gemäss Fig. 1 eine vierte Berechnungseinheit 10 auf, mittels welcher der geschätzte Filterkapazitätsblindleistungswert $Q_{Cf}$ nach vorstehend genannter Formel berechnet wird.

Der geschätzten Filterkapazitätsflussvektor $\psi_{Cf,\alpha\beta}$ wird gemäss Fig. 3 aus dem aktuellen Gleichspannungswert $u_{DC}$ des Energiespeicherkreises 2, aus dem Ansteuersignal S, aus der α-Komponente der Raumzeigertransformation $i_{fi\alpha}$ der Komponenten des Phasenanschlussstromvektors $i_{fi,i}$ und aus der β-Komponente der Raumzeigertransformation $i_{fi\beta}$ der Komponenten des Phasenanschlussstromvektors $i_{fi,i}$ gebildet. Die zweite Berechnungseinheit 4 dient damit zusätzlich der Bildung des geschätzten Filterkapazitätsflussvektors $\psi_{Cf,\alpha\beta}$ aus dem aktuellen Gleichspannungswert $u_{DC}$ des Energiespeicherkreises 2, aus dem Ansteuersignal S, aus der α-Komponente der Raumzeigertransformation $i_{fi\alpha}$ der Komponenten des Phasenanschlussstromvektors $i_{fi,i}$ und aus der β-Komponente der Raumzeigertransformation $i_{fi\beta}$ der Komponenten des Phasenanschlussstromvektors $i_{fi,i}$.

Die α-Komponente der Raumzeigertransformation $\psi_{Cf\alpha}$ vom Filterkapazitätsflussvektor $\psi_{Cf,\alpha\beta}$ wird somit nach folgender Formel gebildet.

$$\psi_{Cf\alpha} = \int u_{inv,\alpha}\,dt - L_f \cdot i_{fi\alpha}$$

Entsprechend wird die β-Komponente der Raumzeigertransformation $\psi_{Cf\beta}$ vom Filterkapazitätsflussvektor $\psi_{Cf,\alpha\beta}$ nach folgender Formel gebildet.

$$\psi_{Cf\beta} = \int u_{inv,\beta}\,dt - L_f \cdot i_{fi\beta}$$

Gemäss Fig. 3 wird der bereits erwähnte Kompensationsoberschwingungswirkleistungswert $P_h$ und der Kompensationsoberschwingungsblindleistungswert $Q_h$ jeweils aus der α-Komponente der Raumzeigertransformation der Filterausgangsströme $i_{fg\alpha}$, aus der β-Komponente der Raumzeigertransformation der Filterausgangsströme $i_{fg\beta}$, aus einer α-Komponente der Raumzeigertransformation von Filterausgangsflüssen $\psi_{L\alpha}$, aus einer β-Komponente der Raumzeigertransformation von Filterausgangsflüssen $\psi_{L\beta}$ und aus dem Grundschwingungswinkel ωt bezüglich der Grundschwingung des Filterausgangsstromvektors $i_{fg,i}$ gebildet.

Die α-Komponente der Raumzeigertransformation von Filterausgangsflüssen $\psi_{L\alpha}$ wird aus einer α-Komponente der Raumzeigertransformation von geschätzten Filterkapazitätsflüssen $\psi_{Cf\alpha}$ und aus der α-Komponente der Raumzeigertransformation von Filterausgangsströmen $i_{fg\alpha}$ gebildet, was insbesondere nachfolgende Formel verdeutlicht.

$$\psi_{L\alpha} = \psi_{Cf\alpha} - L_{fg} \cdot i_{fg\alpha}$$

Weiterhin wird die β-Komponente der Raumzeigertransformation von Filterausgangsflüssen $\psi_{L\beta}$ aus einer β-Komponente der Raumzeigertransformation von geschätzten Filterkapazitätsflüssen $\psi_{Cf\beta}$ und aus der β-Komponente der Raumzeigertransformation von Filterausgangsströmen $i_{fg\beta}$ gebildet, was insbesondere nachfolgende Formel verdeutlicht.

$$\psi_{L\beta} = \psi_{Cf\beta} - L_{fg} \cdot i_{fg\beta}$$

Die Berechnung der α-Komponente der Raumzeigertransformation von Filterausgangsflüssen $\psi_{L\alpha}$ und der β-Komponente der Raumzeigertransformation von Filterausgangsflüssen $\psi_{L\beta}$ erfolgt beispielsweise in der zweiten Berechnungseinheit 4 oder kann auch in der fünften Berechnungseinheit 11 erfolgen, ist aber der Übersichtlichkeit halber in Fig. 3 nicht dargestellt.

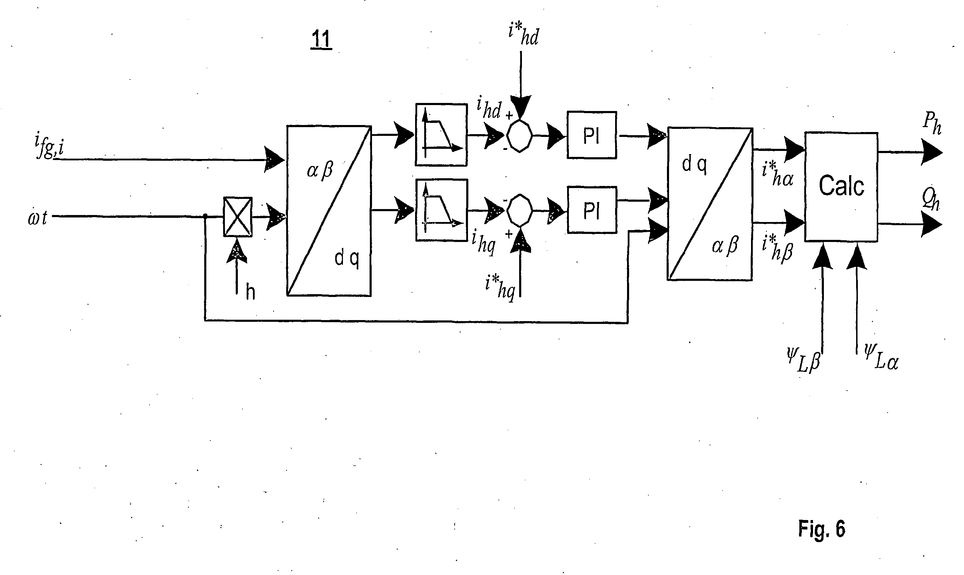

Die Regelungseinrichtung 15 weist eine fünfte Berechnungseinheit 11 zur Bildung des Kompensationsoberschwingungswirkleistungswertes $P_h$ und des Kompensationsoberschwingungsblindleistungswertes $Q_h$ jeweils aus der α-Komponente der Raumzeigertransformation der Filterausgangsströme $i_{fg\alpha}$, aus der β-Komponente der Raumzeigertransformation der Filterausgangsströme $i_{fg\beta}$, aus der α-Komponente der Raumzeigertransförmation von Filterausgangsflüssen $\psi_{L\alpha}$, aus der β-Komponente der Raumzeigertransformation von Filterausgangsflüssen $\psi_{L\beta}$ und aus dem Grundschwingungswinkel ωt bezüglich der Grundschwingung des Filterausgangsstromvektors $i_{fg,i}$ auf. Die Berechnung des Filterausgangsstromvektors $i_{fg,i}$ erfolgt sehr einfach aus dem Phasenanschlussstromvektors $i_{fi,i}$ und aus dem Filterkapazitätsstromvektor $i_{Cfi,i}$, wie in Fig. 3 gezeigt. Der Grundschwingungswinkel ωt wird den Berechnungseinheiten 9, 10 und 11 von der zweiten Berechnungseinheit 4 gemäss Fig. 3 von einem Phasenregelkreis (Phase locked loop, kurz: PLL) der zweiten Berechnungseinheit 4 bereitgestellt. In Fig. 6 ist eine Ausführungsform der fünften Berechnungseinheit 11 gezeigt. Gemäss Fig. 6 werden bei der fünften Berechnungseinheit 11 zunächst die α-Komponente der Raumzeigertransformation der Filterausgangsströme $i_{fg\alpha}$ und die β-Komponente der Raumzeigertransformation der Filterausgangsströme $i_{fg\beta}$ aus dem zugeführten Filterausgangsstromvektor $i_{fg,i}$ durch Raumzeigertransformation gebildet. Danach werden die α-Komponente der Raumzeigertransformation der Filterausgangsströme $i_{fg\alpha}$ und die β-Komponente der Raumzeigertransformation der Filterausgangsströme $i_{fg\beta}$ Park-Clarke-transformiert, tiefpassgefiltert und als d-Komponente und der q-Komponente der Park-Clarke-Transformation mindestens einer gewünschten ausgewählten Oberschwingung der Filterausgangsströme $i_{hd}$, $i_{hq}$ bezüglich der Grundschwingung der Filterausgangsströme $i_{fg1}$, $i_{fg2}$, $i_{fg3}$ ausgegeben. Der Index h ist steht für die h-te Oberschwingung dieser und nachfolgend genannter Grössen, wobei h=1, 2, 3, ... ist.

Die Park-Clarke-Transformation ist allgemein definiert

$$\overline{a} = \left(a_d + ja_q\right)e^{j\omega t}$$

wobei $\overline{a}$ eine komplexe Grösse, $a_d$ die d-Komponente der Park-Clarke-Transformation der Grösse $\overline{a}$ und aq die q-Komponente der Park-Clarke-Transformation der Grösse $\overline{a}$ ist. Vorteilhaft werden bei der Park-Clarke-Transformation nicht nur die Grundschwingung der komplexen Grösse $\overline{a}$ transformiert, sondern auch sämtlich vorkommende Oberschwingungen der komplexen Grösse $\overline{a}$. Gemäss Fig. 6 wird die d-Komponente und die q-Komponente der Park-Clarke-Transformation der gewünschten ausgewählten h-ten Oberschwingung der Filterausgangsströme $i_{hd}$, $i_{hq}$ jeweils auf einen zugehörigen vorgebbaren Referenzwert $i^*_{hd}$, $i^*_{hq}$, vorzugsweise nach einer Proportional-Integral-Charakteristik, ausgeregelt und danach invers-Park-Clarke-transformiert, wodurch eine α-Komponente der Raumzeigertransformation der h-ten Oberschwingung von Referenzfilterausgangsströmen $i^*_{h\alpha}$ und eine β-Komponente der Raumzeigertransformation der h-ten Oberschwingung von Referenzfilterausgangsströmen $i^*_{h\beta}$ gebildet werden. Schliesslich wird der Kompensationsoberschwingungswirkleistungswert $P_h$ und der Kompensationsoberschwingungsblindleistungswert $Q_h$ jeweils aus der α-Komponente der Raumzeigertransformation der h-ten Oberschwingung von Referenzfilterausgangsströmen $i^*_{h\alpha}$, der β-Komponente der Raumzeigertransformation der h-ten Oberschwingung von Referenzfilterausgangsströmen $i^*_{h\beta}$, der α-Komponente der Raumzeigertransformation der Filterausgangsflüsse $\psi_{L\alpha}$ und aus der β-Komponente der Raumzeigertransformation der Filterausgangsflüsse $\psi_{L\beta}$ berechnet, was insbesondere nachfolgende Formeln verdeutlichen.

$$P_h = \omega \cdot \left(\psi_{L\alpha} \cdot i^*_{h\beta} - \psi_{L\beta} \cdot i^*_{h\alpha}\right)$$

$$Q_h = \omega \cdot \left(\psi_{L\alpha} \cdot i^*_{h\alpha} + \psi_{L\beta} \cdot i^*_{h\beta}\right)$$

Sämtliche Schritte des erfindungsgemässen Verfahrens können als Software realisiert werden, wobei diese dann beispielsweise auf ein Computersystem, insbesondere mit einem digitalen Signalprozessor, geladen werden und darauf ablaufen können. Die in einem solchen System vorkommenden digitalen Verzögerungszeiten, insbesondere für die Berechnungen, können beispielsweise durch Addition eines zusätzlichen Terms zu der Grundschwingungsfrequenz ωt bei der Park-Clarke-Transformation allgemein berücksichtigt werden. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 2 und Fig. 3 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung das erfindungsgemässe Verfahren besonders einfach durchführbar.

**Bezugszeichenliste**

| | |
|---|---|
| 1 | Umrichtereinheit |
| 2 | Energiespeicherkreis |
| 3 | Ansteuerschaltung |
| 4 | zweite Berechnungseinheit |
| 5 | erste Berechnungseinheit |
| 6 | Hystereseregler |
| 7 | Mittelwertbilder |
| 8 | Integrierer |
| 9 | dritte Berechnungseinheit |
| 10 | vierte Berechnungseinheit |
| 11 | fünfte Berechnungseinheit |
| 12 | Tiefpassfilter |
| 13 | zweiter Summierer |
| 14 | dritter Summierer |
| 15 | Regelungseinrichtung |
| 16 | erster Summierer |

**Patentansprüche**

1. Verfahren zum Betrieb einer Umrichterschaltung, wobei die Umrichterschaltung eine Umrichtereinheit (1) mit einer Vielzahl an ansteuerbaren Leistungshalbleiterschaltern und einen durch zwei in Serie geschaltete Kondensatoren gebildeten Energiespeicherkreis (2) aufweist,

bei dem die ansteuerbaren Leistungshalbleiterschalter mittels eines aus einem Hysteresesignalvektor (x) gebildeten Ansteuersignals (S) angesteuert werden und der Hysteresesignalvektor (x) aus einem Differenzphasenanschlussstromvektor ($\Delta i_{fi,i}$) mittels eines Hysteresereglers (6) gebildet wird und

der Differenzphasenanschlussstromvektor $(\Delta i_{fi,i})$ aus der Subtraktion eines Phasenanschlussstromvektors $(i_{fi,i})$ von einem Referenzphasenanschlussstromvektor $(i_{fi,i,ref})$ gebildet wird, wobei der Referenzphasenanschlussstromvektor $(i_{fi,i,ref})$ aus einem Differenzwirkleistungswert $(P_{diff})$, einem Differenzblindleistungswert $(Q_{diff})$ und einem Phasenflussvektor $(\psi_{g,\alpha\beta})$ gebildet wird,
**dadurch gekennzeichnet,**
**dass** zur Bildung des Differenzphasenanschlussstromvektor $(\Delta i_{fi,i})$ zusätzlich ein Stromkorrekturwert $(i_0)$ subtrahiert wird,
**dass** der Stromkorrekturwert $(i_0)$ durch Integration eines Phasenanschlussspannungsmittelwertes $(u_{inv,A})$ gebildet wird, und
**dass** der Phasenanschlussspannungsmittelwert $(u_{inv,A})$ durch Ermittlung des arithmetischen Mittelwertes der Phasenanschlussspannungen $(u_{inv,iM})$ mit Bezugspunkt des Verbindungspunktes (M) der Kondensatoren des Energiespeicherkreis (2) gebildet wird.

2. Verfahren nach Anspruch 1, **dadurch gekennzeichnet, dass** der Phasenflussvektor $(\psi_{g,\alpha\beta})$ aus dem Phasenanschlussstromvektor $(i_{fi,i})$, aus dem Ansteuersignal (S) und aus einem aktuellen Gleichspannungswert $(u_{DC})$ des Energiespeicherkreises (2) gebildet wird.

3. Verfahren nach einem der Ansprüche 1 oder 2, **dadurch gekennzeichnet, dass** an jedem Phasenanschluss der Umrichtereinheit (1) ein LCL-Filter $(L_{f,i}, C_{fi}, L_{fg,i})$ angeschlossen ist, dass der Differenzwirkleistungswert $(P_{diff})$ aus der Subtraktion eines Dämpfungswirkleistungswertes $(P_d)$ von der Summe aus einem Referenzwirkleistungswert $(P_{ref})$ und mindestens einem Kompensationsoberschwingungswirkleistungswert $(P_h)$ bezüglich der Grundschwingung des Filterausgangsstromvektors $(i_{fg,i})$ der LCL-Filter gebildet wird, wobei der Dämpfungswirkleistungswert $(P_d)$ aus einer mit einem einstellbaren Dämpfungsfaktor $(k_d)$ gewichteten Summe von einer Multiplikation einer $\alpha$-Komponente der Raumzeigertransformation von Filterkapazitätsströmen $(i_{Cf\alpha})$ der LCL-Filter mit einer $\alpha$-Komponente der Raumzeigertransformation $(i_{fi\alpha})$ der Komponenten des Phasenanschlussstromvektors $(i_{fi,i})$ und einer Multiplikation einer $\beta$-Komponente der Raumzeigertransformation von Filterkapazitätsströmen $(i_{Cf\beta})$ der LCL-Filter mit einer $\beta$-Komponente der Raumzeigertransformation $(i_{fi\beta})$ der Komponenten des Phasenanschlussstromvektors $(i_{fi,i})$ gebildet wird, dass der Differenzblindleistungswert $(Q_{diff})$ aus der Subtraktion von der Summe aus einem Referenzblindleistungswert $(Q_{ref})$ und mindestens einem Kompensationsober-, schwingungsblindleistungswert $(Q_h)$ bezüglich der Grundschwingung des Filterausgangsstromvektors $(i_{fg,i})$ der LCL-Filter gebildet wird, wobei der Dämpfungsblindleistungswert $(Q_d)$ aus einer mit dem einstellbaren Dämpfungsfaktor $(k_d)$ gewichteten Differenz von einer Multiplikation der $\beta$-Komponente der Raumzeigertransformation von Filterkapazitätsströmen $(i_{Cf\beta})$ der LCL-Filter mit der $\alpha$-Komponente der Raumzeigertransformation $(i_{fi\alpha})$ der Komponenten des Phasenanschlussstromvektors $(i_{fi,i})$ und einer Multiplikation der $\alpha$-Komponente der Raumzeigertransformation von Filterkapazitätsströmen $(i_{Cf\alpha})$ der LCL-Filter mit der $\beta$-Komponente der Raumzeigertransformation $(i_{fi\beta})$ der Komponenten des Phasenanschlussstromvektors $(i_{fi,i})$ gebildet wird.

4. Verfahren nach Anspruch 3, **dadurch gekennzeichnet, dass** zur Bildung des Differenzblindleistungswertes $(Q_{diff})$ zusätzlich ein Kompensationsblindleistungswert $(Q_{comp})$ addiert ist, wobei der Kompensationsblindleistungswert $(Q_{comp})$ durch Tiefpassfilterung eines geschätzten Filterkapazitätsblindleistungswertes $(Q_{Cf})$ gebildet wird.

5. Verfahren nach Anspruch 4, **dadurch gekennzeichnet, dass** der geschätzte Filterkapazitätsblindleistungswert $(Q_{Cf})$ aus der $\alpha$-Komponente der Raumzeigertransformation der Filterkapazitätsströme $(i_{Cf\alpha})$, aus der $\beta$-Komponente der Raumzeigertransformation der Filterkapazitätsströme $(i_{Cf\beta})$, aus einem geschätzten Filterkapazitätsflussvektor $(\psi_{Cf,\alpha\beta})$ und aus dem Grundschwingungswinkel $(\omega t)$ bezüglich der Grundschwingung des Filterausgangsstromvektors $(i_{fg,i})$ gebildet wird.

6. Verfahren nach Anspruch 5, **dadurch gekennzeichnet, dass** der geschätzten Filterkapazitätsflussvektor $(\psi_{Cf,\alpha\beta})$ aus einem aktuellen Gleichspannungswert $(u_{DC})$ des Energiespeicherkreises (2), aus dem Ansteuersignal (S), aus der $\alpha$-Komponente der Raumzeigertransformation $(i_{fi\alpha})$ der Komponenten des Phasenanschlussstromvektors $(i_{fi,i})$ und aus der $\beta$-Komponente der Raumzeigertransformation $(i_{fi\beta})$ der Komponenten des Phasenanschlussstromvektors $(i_{fi,i})$ gebildet wird.

7. Verfahren nach einem der Ansprüche 3 bis 6, **dadurch gekennzeichnet, dass** der Kompensationsoberschwingungswirkleistungswert $(P_h)$ und der Kompensationsoberschwingungsblindleistungswert $(Q_h)$ jeweils aus der $\alpha$-Komponente der Raumzeigertransformation der Filterausgangsströme $(i_{fg\alpha})$, aus der $\beta$-Komponente der Raumzeigertransformation der Filterausgangsströme $(i_{fg\beta})$, aus einer $\alpha$-Komponente der Raumzeigertransformation von Filterausgangsflüssen $(\psi_{L\alpha})$, aus einer $\beta$-Komponente der Raumzeigertransformation von Filterausgangsflüssen $(\psi_{L\beta})$ und aus dem Grundschwingungswinkel $(\omega t)$ bezüglich der Grundschwingung des Filterausgangsstromvektors $(i_{fg,i})$

gebildet wird.

8. Verfahren nach Anspruch 1, **dadurch gekennzeichnet, dass** der Differenzwirkleistungswert ($P_{diff}$) einem vorgebbaren Referenzwirkleistungswert ($P_{ref}$) entspricht, und dass der Differenzblindleistungswert ($Q_{diff}$) einem vorgebbaren Referenzblindleistungswert ($Q_{ref}$) entspricht.

9. Vorrichtung zur Durchführung eines Verfahrens zum Betrieb einer Umrichterschaltung, wobei die Umrichterschaltung eine Umrichtereinheit (1) mit einer Vielzahl an ansteuerbaren Leistungshalbleiterschaltern und einen durch zwei in Serie geschaltete Kondensatoren gebildeten Energiespeicherkreis (2) aufweist, mit einer der Erzeugung eines Hysteresesignalvektors (x) dienenden Regelungseinrichtung (15), die über eine Ansteuerschaltung (3) zur Bildung eines Ansteuersignals (S) mit den ansteuerbaren Leistungshalbleiterschaltern verbunden ist, wobei Regelungseinrichtung (15) einen Hystereseregler (6) zur Bildung des Hysteresesignalvektors (x) aus einem Differenzphasenanschlussstromvektor ($\Delta i_{fi,i}$), einen ersten Summierer (16) zur Bildung des Differenzphasenanschlussstromvektor ($\Delta i_{fi,i}$) aus der Subtraktion eines Phasenanschlussstromvektors ($i_{fi,i}$) von einem Referenzphasenanschlussstromvektor ($i_{fi,i,ref}$) und eine erste Berechnungseinheit (5) zur Bildung des Referenzphasenanschlussstromvektors ($i_{fi,i,ref}$) aus einem Differenzwirkleistungswert ($P_{diff}$), einem Differenzblindleistungswert ($Q_{diff}$) und einem Phasenflussvektor ($\psi_{g,\alpha\beta}$) aufweist, **dadurch gekennzeichnet, dass** dem ersten Summierer (16) zur Bildung des Differenzphasenanschlussstromvektor ($\Delta i_{fi,i}$) zusätzlich ein Stromkorrekturwert ($i_0$) zur Bildung des Differenzphasenanschlussstromvektors ($\Delta i_{fi,i}$) aus der Subtraktion des Phasenanschlussstromvektors ($i_{fi,i}$) und des Stromkorrekturwertes ($i_0$) von dem Referenzphasenanschlussstromvektor ($i_{fi,i,ref}$) zugeführt ist, **dass** Regelungseinrichtung (15) umfasst einen Integrierer (8) zur Bildung des Stromkorrekturwertes ($i_0$) durch Integration eines Phasenanschlussspannungsmittelwertes ($u_{inv,A}$), und einen Mittelwertbilder (7) zur Bildung des Phasenanschlussspannungsmittelwertes ($u_{inv,A}$) durch Ermittlung des arithmetischen Mittelwertes der Phasenanschlussspannungen ($u_{inv,iM}$) mit Bezugspunkt des Verbindungspunktes (M) der Kondensatoren des Energiespeicherkreises (2).

10. Vorrichtung nach Anspruch 9, **dadurch gekennzeichnet, dass** Regelungseinrichtung (15) eine zweite Berechnungseinheit (4) zur Bildung des Phasenflussvektors ($\psi_{g,\alpha\beta}$) aus dem Phasenan-schlussstromvektor ($i_{fi,i}$), aus dem Ansteuersignal (S) und aus einem aktuellen Gleichspannungswert ($u_{DC}$) des Energiespeicherkreises (2) aufweist.

11. Vorrichtung nach Anspruch 9 oder 10, **dadurch gekennzeichnet, dass** an jedem Phasenanschluss der Umrichtereinheit (1) ein LCL-Filter ($L_{f,i}$, $C_{fi}$, $L_{fg,i}$) angeschlossen ist, dass die Regelungseinrichtung (15) einen zweiten Summierer (13) zur Bildung des Differenzwirkleistungswertes ($P_{diff}$) aus der Subtraktion eines Dämpfungswirkleistungswertes ($P_d$) von der Summe aus einem Referenzwirkleistungswert ($P_{ref}$) und mindestens einem Kompensationsoberschwingungswirkleistungswert ($P_h$) bezüglich der Grundschwingung des Filterausgangsstromvektors ($i_{fg,i}$) der LCL-Filter aufweist, wobei die Regelungseinrichtung (15) eine dritte Berechnungseinheit (9) zur Bildung des Dämpfungswirkleistungswertes ($P_d$) aus einer mit einem einstellbaren Dämpfungsfaktor ($k_d$) gewichteten Summe von einer Multiplikation einer $\alpha$-Komponente der Raumzeigertransformation von Filterkapazitätsströmen ($i_{Cf\alpha}$) der LCL-Filter mit einer $\alpha$-Komponente der Raumzeigertransformation ($i_{fi\alpha}$) der Komponenten des Phasenanschlussstromvektors ($i_{fi,i}$) und einer Multiplikation einer $\beta$-Komponente der Raumzeigertransformation von Filterkapazitätsströme ($i_{Cf\beta}$) der LCL-Filter mit einer $\beta$-Komponente der Raumzeigertransformation ($i_{fi\beta}$) der Komponenten des Phasenanschlussstromvektors ($i_{fi,i}$) aufweist, dass die Regelungseinrichtung (15) einen dritten Summierer (14) zur Bildung des Differenzblindleistungswertes ($Q_{diff}$) aus der Subtraktion von der Summe aus einem Referenzblindleistungswert ($Q_{ref}$) und mindestens einem Kompensationsoberschwingungsblindleistungswert ($Q_h$) bezüglich der Grundschwingung des Filterausgangsstromvektors ($i_{fg,i}$) der LCL-Filter aufweist, wobei die dritte Berechnungseinheit (9) zusätzlich der Bildung des Dämpfungsblindleistungswertes ($Q_d$) aus einer mit dem einstellbaren Dämpfungsfaktor ($k_d$) gewichteten Differenz von einer Multiplikation der $\beta$-Komponente der Raumzeigertransformation von Filterkapazitätsströmen ($i_{Cf\beta}$) der LCL-Filter mit der $\alpha$-Komponente der Raumzeigertransformation ($i_{fi\alpha}$) der Komponenten des Phasenanschlussstromvektors ($i_{fi,i}$) und einer Multiplikation der $\alpha$-Komponente der Raumzeigertransformation von Filterkapazitätsströmen ($i_{Cf\alpha}$) der LCL-Filter mit der $\beta$-Komponente der Raumzeigertransformation ($i_{fi\beta}$) der Komponenten des Phasenanschlussstromvektors ($i_{fi,i}$) dient.

12. Vorrichtung nach Anspruch 11, **dadurch gekennzeichnet, dass** dem dritten Summierer zur Bildung des Differenzblindleistungswertes ($Q_{diff}$) zusätzlich ein Kompensationsblindleistungswert ($Q_{comp}$) zugeführt ist, wobei der Kompensationsblindleistungswert ($Q_{comp}$) durch Tiefpassfilterung eines geschätzten Filterkapazitätsblindleistungswertes ($Q_{Cf}$) mittels eines Tiefpassfilters (12) gebildet ist.

13. Vorrichtung nach Anspruch 12, **dadurch gekennzeichnet, dass** Regelungseinrichtung (15) eine vierte Berechnungseinheit (10) zur Bildung des geschätzten Filterkapazitätsblindleistungswertes ($Q_{Cf}$) aus der $\alpha$-Komponente der Raumzeigertransformation der Filterkapazitätsströme ($i_{Cf\alpha}$), aus der $\beta$-Komponente der Raumzeigertransformation der Filterkapazitätsströme ($i_{Cf\beta}$), aus einem geschätzten Filterkapazitätsflussvektor ($\psi_{Cf,\alpha\beta}$) und aus dem Grundschwingungswinkel ($\omega t$) bezüglich der Grundschwingung des Filterausgangsstromvektors ($i_{fg,i}$) aufweist.

14. Vorrichtung nach Anspruch 12, **dadurch gekennzeichnet, dass** die zweite Berechnungseinheit (4) zusätzlich der Bildung des geschätzten Filterkapazitätsflussvektors ($\psi_{Cf,\alpha\beta}$) aus einem aktuellen Gleichspannungswert ($u_{DC}$) des Energiespeicherkreises (2), aus dem Ansteuersignal (S), aus der $\alpha$-Komponente der Raumzeigertransformation ($i_{fi\alpha}$) der Komponenten des Phasenanschlussstromvektors ($i_{fi,i}$) und aus der $\beta$-Komponente der Raumzeigertransformation ($i_{fi\beta}$) der Komponenten des Phasenanschlussstromvektors ($i_{fi,i}$) dient.

15. Vorrichtung nach einem der Ansprüche 11 bis 14, **dadurch gekennzeichnet, dass** Regelungseinrichtung (15) eine fünfte Berechnungseinheit (11) zur Bildung des Kompensationsoberschwingungswirkleistungswertes ($P_h$) und des Kompensationsoberschwingungsblindleistungswertes ($Q_h$) jeweils aus der $\alpha$-Komponente der Raumzeigertransformation der Filterausgangsströme ($i_{fg\alpha}$), aus der $\beta$-Komponente der Raumzeigertransformation der Filterausgangsströme ($i_{fg\beta}$), aus einer $\alpha$-Komponente der Raumzeigertransformation von Filterausgangsflüssen ($\psi_{L\alpha}$), aus einer $\beta$-Komponente der Raumzeigertransformation von Filterausgangsflüssen ($\psi_{L\beta}$) und aus dem Grundschwingungswinkel ($\omega t$) bezüglich der Grundschwingung des Filterausgangsstromvektors ($i_{fg,i}$) aufweist.

16. Vorrichtung nach Anspruch 9, **dadurch gekennzeichnet, dass** der Differenzwirkleistungswert ($P_{diff}$) einem vorgebbaren Referenzwirkleistungswert ($P_{ref}$) entspricht, und dass der Differenzblindleistungswert ($Q_{diff}$) einem vorgebbaren Referenzblindleistungswert ($Q_{ref}$) entspricht.

## Claims

1. Method for operating a converter circuit, with the converter circuit having a converter unit (1) with a multiplicity of controllable power semiconductor switches and having an energy storage circuit (2) formed by two series-connected capacitors,
in which the controllable power semiconductor switches are controlled by means of a control signal (S) formed from a hysteresis signal vector (x), and the hysteresis signal vector (x) is formed from a difference-phase connection current vector ($\Delta i_{fi,i}$) by means of a hysteresis regulator (6), and the difference-phase connection current vector ($\Delta i_{fi,i}$) is formed from the subtraction of a phase connection current vector ($i_{fi,i}$) from a reference phase connection current vector ($i_{fi,i,ref}$), with the reference phase connection current vector ($i_{fi,i,ref}$) being formed from a difference power value ($P_{diff}$), a difference wattless-component value ($Q_{diff}$) and a phase flux vector ($\psi_{g,\alpha\beta}$),
**characterized**
**in that** a current correction value ($i_0$) is additionally subtracted in order to form the difference-phase connection current vector ($\Delta i_{fi,i}$) in that the current correction value ($i_0$) is formed by integration of a phase connection voltage mean value ($u_{inv,A}$), and
**in that** the phase connection voltage mean value ($u_{inv,A}$) is formed by determining the arithmetic mean value of the phase connection voltages ($u_{inv,iM}$) with the reference point of the connection point (M) of the capacitors in the energy storage circuit (2).

2. Method according to Claim 1, **characterized in that** the phase flux vector ($\psi_{g,\alpha\beta}$) is formed from the phase connection current vector ($i_{fi,i}$), from the control signal (S) and from an instantaneous DC voltage value ($u_{DC}$) of the energy storage circuit (2).

3. Method according to one of Claims 1 or 2, **characterized in that** an LCL-filter ($L_{f,i}$, $C_{fi}$, $L_{fg,i}$) is connected to each phase connection of the converter unit (1),
**in that** the difference power value ($P_{diff}$) is formed from subtraction of a damping power value ($P_d$) from the sum of a reference power value ($P_{ref}$) and at least one compensation harmonic power valve ($P_h$) with respect to the fundamental frequency of the filter output current vector ($i_{fg,i}$) of the LCL-filter, with the damping power value ($P_d$) being formed from a sum, weighted by a variable damping factor ($k_d$) of a multiplication of an $\alpha$-component of the space vector transformation of filter capacitance currents ($i_{Cf\alpha}$) of the LCL-filter by an $\alpha$-component of the space vector transformation ($i_{fi\alpha}$) of the components of the phase connection current vector ($i_{fi,i}$), and multiplication of a $\beta$-component of the space vector transformation of filter capacitance currents ($i_{Cf\beta}$) of the LCL-filter by a $\beta$-component of the space vector transformation ($i_{fi\beta}$) of the components of the phase connection current vector ($i_{fi,i}$),
**in that** the difference wattless component value ($Q_{diff}$) is formed from subtraction of the sum of a reference wattless component value ($Q_{ref}$) and at least one compensation harmonic wattless component value ($Q_h$) with respect to the fundamental frequency of the filter output current vector ($i_{fg,i}$) of the LCL-filter, with the damping wattless component value ($Q_d$) being formed from a difference, weighted by the variable damping factor ($k_d$), of a multiplication of the β-component of the space vector transformation of filter capacitance currents ($i_{Cf\beta}$) of the LCL-filter by the α-component of the space vector transformation ($i_{fi\alpha}$) of the components of the phase connection current vector ($i_{fi,i}$) and multiplication of the α-component of the space vector transformation of filter capacitance currents ($i_{Cf\alpha}$) of the LCL-filter by the β-component of the space vector transformation ($i_{fi\beta}$) of the components of the phase connection current vector ($i_{fi,i}$).

4. Method according to Claim 3, **characterized in that,** in order to form the difference wattless component value ($Q_{diff}$) a compensation wattless component value ($Q_{comp}$) is also added, with the compensation wattless component value ($Q_{comp}$) being formed by low-pass filtering of an estimated filter capacitance wattless component value ($Q_{Cf}$).

5. Method according to Claim 4, **characterized in that** the estimated filter capacitance wattless component value ($Q_{Cf}$) is formed from the α-component of the space vector transformation of the filter capacitance currents ($i_{Cf\alpha}$), from the β-component of the space vector transformation of the filter capacitance currents ($i_{Cf\beta}$), from an estimated filter capacitance flux vector ($\psi_{Cf,\alpha\beta}$) and from the fundamental frequency angle ($\omega t$) with respect to the fundamental frequency of the filter output current vector ($i_{fg,i}$).

6. Method according to Claim 5, **characterized in that** the estimated filter capacitance flux vector ($\psi_{Cf,\alpha\beta}$) is formed from an instantaneous DC voltage value ($u_{DC}$) of the energy storage circuit (2), from the control signal (S), from the α-component of the space vector transformation ($i_{fi\alpha}$) of the components of the phase connection current vector ($i_{fi,i}$) and from the β-component of the space vector transformation ($i_{fi\beta}$) of the components of the phase connection current vector ($i_{fi,i}$).

7. Method according to one of Claims 3 to 6, **characterized in that** the compensation harmonic power value ($P_h$) and the compensation harmonic wattless component value ($Q_h$) are each formed from the α-component of the space vector transformation of the filter output currents ($i_{fg\alpha}$), from the β-component of the space vector transformation of the filter output currents ($i_{fg\beta}$), from an α-component of the space vector transformation of the filter output fluxes ($\psi_{L\alpha}$), from a β-component of the space vector transformation of the filter output fluxes ($\psi_{L\beta}$) and from the fundamental frequency angle ($\omega t$) with respect to the fundamental frequency of the filter output current vector ($i_{fg,i}$).

8. Method according to Claim 1, **characterized in that** the difference power value ($P_{diff}$) corresponds to a predetermineable reference power value ($P_{ref}$), and **in that** the difference wattless component value ($Q_{diff}$) corresponds to a predetermineable reference wattless component value ($Q_{ref}$).

9. Device for carrying out a method for operating a converter circuit, with the converter circuit having a converter unit (1) with a multiplicity of controllable power semiconductor switches and having an energy storage circuit (2) formed by two series-connected capacitors,
having a control device (15) which is used to produce a hysteresis signal vector (x) and is connected via a control circuit (3) for forming a control signal (S) to the controllable power semiconductor switches, with the control device (15) having a hysteresis regulator (6) for forming the hysteresis signal vector (x) from a difference-phase connection current vector ($\Delta i_{fi,i}$), a first adder (16) for forming the difference-phase connection current vector ($\Delta i_{fi,i}$) from the subtraction of a phase connection current vector ($i_{fi,i}$) from a reference phase connection current vector ($i_{fi,i,ref}$) and a first calculation unit (5) for forming the reference phase connection current vector ($i_{fi,i,ref}$) from a difference power value ($P_{diff}$), a difference wattless component value ($Q_{diff}$) and a phase flux vector ($\psi_{g,\alpha\beta}$), **characterized in that** a current correction value ($i_0$) is additionally supplied to the first adder (16) in order to form the difference-phase connection current vector ($\Delta i_{fi,i}$), in order to form the difference-phase connection current vector ($\Delta i_{fi,i}$) from the subtraction of the phase connection current vector ($i_{fi,i}$) and the current correction value ($i_0$) from the reference phase connection current vector ($i_{fi,i,ref}$),
**in that** the control device (15) comprises an integrator (8) for forming the current correction value ($i_0$) by integration of a phase connection voltage mean value ($u_{inv,A}$), and
an averager (7) for forming the phase connection voltage mean value ($u_{inv,A}$) by determining the arithmetic mean value of the phase connection voltages ($u_{inv,iM}$) with the reference point of the connection point (M) of the capacitors in the energy storage circuit (2).

10. Device according to Claim 9, **characterized in that** the control device (15) has a second calculation unit (4) for forming the phase flux vector ($\psi_{g,\alpha\beta}$) from the phase connection current vector ($i_{fi,i}$), from the control signal (S) and from an instantaneous DC voltage value ($u_{DC}$) of the energy storage circuit (2).

11. Device according to Claim 9 or 10, **characterized in that** an LCL-filter ($L_{f,i}$, $C_{fi}$, $L_{fg,i}$) is connected to each phase connection of the converter unit (1), **in that** the control device (15) has a second adder (13) in order to form the difference power value ($P_{diff}$) from the subtraction of a damping power value ($P_d$) from the sum of a reference power value ($P_{ref}$) and at least one compensation harmonic power value ($P_h$) with respect to the fundamental frequency of the filter output current vector ($i_{fg,i}$) of the LCL-filter, with the control device (15) having a third calculation unit (9) in order to form the damping power value ($P_d$) from a sum which is weighted with a variable damping factor ($k_d$) of a multiplication of an α-component of the space vector transformation of the filter capacitance currents ($i_{Cf\alpha}$) of the LCL-filter by an α-component of the space vector transformation ($i_{fi\alpha}$) of the components of the phase connection current vector ($i_{fi,i}$) and multiplication of a β-component of the space vector transformation of filter capacitance currents ($i_{Cf\beta}$) of the LCL-filter by a β-component of the space vector transformation ($i_{fi\beta}$) of the components of the phase connection current vector ($i_{fi,i}$), **in that** the control device (15) has a third adder (14) in order to form the difference wattless component value ($Q_{diff}$) from the subtraction of the sum of a reference wattless component value ($Q_{ref}$) and at least one compensation harmonic wattless component value ($Q_h$) with respect to the fundamental frequency of the filter output current vector ($i_{fg,i}$) of the LCL-filter, with the third calculation unit (9) additionally being used to form the damping wattless component value ($Q_d$) from a difference, which is weighted with the variable damping factor ($k_d$) between a multiplication of the β-component of the space vector transformation of filter capacitance currents ($i_{Cf\beta}$) of the LCL-filter by the α-component of the space vector transformation ($i_{fi\alpha}$) of the components of the phase connection current vector ($i_{fi,i}$), and multiplication of the α-component of the space vector transformation of filter capacitance currents ($i_{Cf\alpha}$) of the LCL-filter by the β-component of the space vector transformation ($i_{fi\beta}$) of the components of the phase connection current vector ($i_{fi,i}$).

12. Device according to Claim 11, **characterized in that**, in order to form the difference wattless component ($Q_{diff}$), the third area is additionally supplied with a compensation wattless component ($Q_{comp}$), with the compensation wattless component value ($Q_{comp}$) being formed by low-pass filtering of an estimated filter capacitance wattless component value ($Q_{Cf}$) by means of a low-pass filter (12).

13. Device according to Claim 12, **characterized in that** the control device (15) has a fourth calculation unit (10) in order to form the estimated filter capacitance wattless component value ($Q_{Cf}$) from the α-component of the space vector transformation of the filter capacitance currents ($i_{Cf\alpha}$), from the β-component of the space vector transformation of the filter capacitance currents ($i_{Cf\beta}$), from an estimated filter capacitance flux vector ($\psi_{Cf,\alpha\beta}$) and from the fundamental frequency angle ($\omega t$) with respect to the fundamental frequency of the filter output current vector ($i_{fg,i}$).

14. Device according to Claim 12, **characterized in that**, the second calculation unit (4) is additionally used to form the estimated filter capacitance flux vector ($\psi_{Cf,\alpha\beta}$) from an instantaneous DC voltage value ($u_{DC}$) of the energy storage circuit (2), from the control signal (S), from the α-component of the space vector transformation ($i_{fi\alpha}$) of the components of the phase connection current vector ($i_{fi,i}$) and from the β-component of the space vector transformation ($i_{fi\beta}$) of the components of the phase connection current vector ($i_{fi,i}$).

15. Device according to one of Claims 11 to 14, **characterized in that** the control device (15) has a fifth calculation unit (11) in order to form the compensation harmonic power value ($P_h$) and the compensation harmonic wattless component value ($Q_n$), in each case from the α-component of the space vector transformation of the filter output currents ($i_{fg\alpha}$), from the β-component of the space vector transformation of the filter output currents ($i_{fg\beta}$), from an α-component of the space vector transformation of filter output fluxes ($\psi_{L\alpha}$), from a β-component of the space vector transformation of filter output fluxes ($\psi_{L\beta}$) and from the fundamental frequency angle ($\omega t$) with respect to the fundamental frequency of the filter output current vector ($i_{fg,i}$).

16. Device according to Claim 9, **characterized in that** the difference power value ($P_{diff}$) corresponds to a predetermineable reference power value ($P_{ref}$), and **in that** the difference wattless component value ($Q_{diff}$) corresponds to a predetermineable reference wattless component value ($Q_{ref}$).

**Revendications**

1. Procédé pour faire fonctionner un circuit convertisseur, le circuit convertisseur présentant une unité de conversion (1) comprenant une pluralité de commutateurs semiconducteurs de puissance commandables et un circuit accumulateur d'énergie (2) formé par deux condensateurs branchés en série, selon lequel les commutateurs semiconducteurs de puissance commandables sont commandés au moyen d'un signal de commande (S) formé à partir d'un vecteur de signal d'hystérésis (x) et le vecteur de signal d'hystérésis (x) est formé à partir d'un vecteur de courant de borne de phase différentiel ($\Delta i_{fi,i}$) au moyen d'un régulateur d'hystérésis (6) et le vecteur de courant de borne de phase différentiel ($\Delta i_{fi,i}$) est formé à partir de la soustraction d'un vecteur de courant de borne de phase ($i_{fi,i}$) d'un vecteur de courant de borne de phase de référence ($i_{fi,i,\,réf}$), le vecteur de courant de borne de phase de référence ($i_{fi,i,\,réf}$) étant formé à partir d'une valeur de puissance active différentielle ($P_{diff}$), d'une valeur de puissance réactive différentielle ($Q_{diff}$) et d'un vecteur de flux de phase ($\psi_{g,\,\alpha\beta}$),
**caractérisé en ce**
**qu'**une valeur de correction du courant ($i_0$) est en plus soustraite pour former le vecteur de courant de borne de phase différentiel ($\Delta i_{fi,i}$),
**que** la valeur de correction du courant ($i_0$) est formée par intégration d'une valeur moyenne de la tension de borne de phase ($u_{inv,\,A}$) et
**que** la valeur moyenne de la tension de borne de phase ($u_{inv,\,A}$) est formée en déterminant la moyenne arithmétique des tensions de borne de phase ($u_{inv,\,iM}$) en prenant comme point de référence le point de connexion (M) des condensateurs du circuit accumulateur d'énergie (2).

2. Procédé selon la revendication 1, **caractérisé en ce que** le vecteur de flux de phase ($\psi_{g,\,\alpha\beta}$) est formé à partir du vecteur de courant de borne de phase ($i_{fi,i}$), du signal de commande (S) et d'une valeur de tension continue actuelle ($u_{DC}$) du circuit accumulateur d'énergie (2).

3. Procédé selon l'une des revendications 1 ou 2, **caractérisé en ce qu'**un filtre LCL ($L_{f,i}$, $C_{fi}$, $L_{fg,i}$) est raccordé à chaque borne de phase de l'unité de conversion (1), que la valeur de puissance active différentielle ($P_{diff}$) est formée à partir de la soustraction d'une valeur de puissance active d'atténuation ($P_d$) de la somme d'une valeur de puissance active de référence ($P_{réf}$) et d'au moins une valeur de puissance active d'oscillation harmonique de compensation ($P_h$) par rapport à l'oscillation de base du vecteur de courant de sortie de filtre ($i_{fg,i}$) du filtre LCL, la valeur de puissance active d'atténuation ($P_d$) étant formée à partir d'une somme pondérée avec un facteur d'atténuation ($k_d$) réglable d'une multiplication d'une composante $\alpha$ de la transformation du pointeur de temps des courants de capacité de filtre ($i_{Cf\alpha}$) du filtre LCL par une composante $\alpha$ de la transformation du pointeur de temps ($i_{fi\alpha}$) des composantes du vecteur de courant de borne de phase ($i_{fi,i}$) et une multiplication d'une composante $\beta$ de la transformation du pointeur de temps des courants de capacité de filtre ($i_{Cf\beta}$) du filtre LCL par une composante $\beta$ de la transformation du pointeur de temps ($i_{fi\beta}$) des composantes du vecteur de courant de borne de phase ($i_{fi,i}$),

que la valeur de puissance réactive différentielle ($Q_{diff}$) est formée à partir de la soustraction de la somme d'une valeur de puissance réactive de référence ($Q_{réf}$) et d'au moins une valeur de puissance réactive d'oscillation harmonique de compensation ($Q_h$) par rapport à l'oscillation de base du vecteur de courant de sortie de filtre ($i_{fg,i}$) du filtre LCL, la valeur de puissance réactive d'atténuation ($Q_d$) étant formée à partir d'une différence pondérée avec le facteur d'atténuation ($k_d$) réglable d'une multiplication de la composante $\beta$ de la transformation du pointeur de temps des courants de capacité de filtre ($i_{Cf\beta}$) du filtre LCL par la composante $\alpha$ de la transformation du pointeur de temps ($i_{fi\alpha}$) des composantes du vecteur de courant de borne de phase ($i_{fi,i}$) et une multiplication de la composante $\alpha$ de la transformation du pointeur de temps des courants de capacité de filtre ($i_{Cf\alpha}$) du filtre LCL par la composante $\beta$ de la transformation du pointeur de temps ($i_{fi\beta}$) des composantes du vecteur de courant de borne de phase ($i_{fi,i}$).

4. Procédé selon la revendication 3, **caractérisé en ce qu'**une valeur de puissance réactive de compensation ($Q_{comp}$) est en plus additionnée pour former la valeur de puissance réactive différentielle ($Q_{diff}$), la valeur de puissance réactive de compensation ($Q_{comp}$) étant formée par filtrage passe-bas d'une valeur de puissance réactive estimée de capacité de filtre ($Q_{Cf}$).

5. Procédé selon la revendication 4, **caractérisé en ce que** la valeur de puissance réactive estimée de capacité de filtre ($Q_{Cf}$) est formée à partir de la composante $\alpha$ de la transformation du pointeur de temps des courants de capacité de filtre ($i_{Cf\alpha}$), à partir de la composante $\beta$ de la transformation du pointeur de temps des courants de capacité de filtre ($i_{Cf\beta}$) à partir d'un vecteur de flux de capacité de filtre estimé ($\psi_{Cf,\,\alpha\beta}$) et à partir de l'angle d'oscillation de base ($\omega t$) par rapport à l'oscillation de base du vecteur de courant de sortie de filtre ($i_{fg,i}$).

6. Procédé selon la revendication 5, **caractérisé en ce que** le vecteur de flux de capacité de filtre estimé ($\psi_{Cf,\,\alpha\beta}$) est formé à partir d'une valeur de tension continue actuelle ($u_{DC}$) du circuit accumulateur d'énergie (2), à partir du signal de commande (S), à partir de la composante $\alpha$ de la transformation du pointeur de temps ($i_{fi\alpha}$) des composantes du vecteur de courant de borne de phase ($i_{fi,i}$) et à partir de la composante $\beta$ de la transformation du pointeur de temps ($i_{fi\beta}$) des composantes du vecteur de courant de borne de phase ($i_{fi,i}$).

7. Procédé selon l'une des revendications 3 à 6, **caractérisé en ce que** la valeur de puissance active d'oscillation harmonique de compensation ($P_h$) et la

valeur de puissance réactive d'oscillation harmonique de compensation ($Q_h$) sont respectivement formées à partir de la composante $\alpha$ de la transformation du pointeur de temps des courants de sortie de filtre ($i_{fg\alpha}$), à partir de la composante $\beta$ de la transformation du pointeur de temps des courants de sortie de filtre ($i_{fg\beta}$), à partir d'une composante $\alpha$ de la transformation du pointeur de temps des flux de sortie de filtre ($\psi L_\alpha$), à partir d'une composante $\beta$ de la transformation du pointeur de temps des flux de sortie de filtre ($\psi L_\beta$) et à partir de l'angle d'oscillation de base ($\omega t$) par rapport à l'oscillation de base du vecteur de courant de sortie de filtre ($i_{fg,i}$).

8. Procédé selon la revendication 1, **caractérisé en ce que** la valeur de puissance active différentielle ($P_{diff}$) correspond à une valeur de puissance active de référence ($P_{réf}$) qui peut être prédéfinie et que la valeur de puissance réactive différentielle ($Q_{diff}$) correspond à une valeur de puissance réactive de référence ($Q_{réf}$) qui peut être prédéfinie.

9. Dispositif pour mettre en oeuvre un procédé pour faire fonctionner un circuit convertisseur, le circuit convertisseur présentant une unité de conversion (1) comprenant une pluralité de commutateurs semiconducteurs de puissance commandables et un circuit accumulateur d'énergie (2) formé par deux condensateurs branchés en série, comprenant un dispositif de régulation (15) qui sert à générer un vecteur de signal d'hystérésis (x), lequel est relié aux commutateurs semiconducteurs de puissance commandables par le biais d'un circuit de commande (3) destiné à former un signal de commande (S), le dispositif de régulation (15) présentant un régulateur d'hystérésis (6) pour former le vecteur de signal d'hystérésis (x) à partir d'un vecteur de courant de borne de phase différentiel ($\Delta i_{fi,i}$), un premier additionneur (16) pour former le vecteur de courant de borne de phase différentiel ($\Delta i_{fi,i}$) à partir de la soustraction d'un vecteur de courant de borne de phase ($i_{fi,i}$) d'un vecteur de courant de borne de phase de référence ($i_{fi,i,\,réf}$) et une première unité de calcul (5) pour former le vecteur de courant de borne de phase de référence ($i_{fi,i,\,réf}$) à partir d'une valeur de puissance active différentielle ($P_{diff}$), d'une valeur de puissance réactive différentielle ($Q_{diff}$) et d'un vecteur de flux de phase ($\psi_{g,\,\alpha\beta}$), **caractérisé en ce qu'**une valeur de correction du courant ($i_0$) est en plus acheminée au premier additionneur (16) destiné à former le vecteur de courant de borne de phase différentiel ($\Delta i_{fi,i}$) afin de former le vecteur de courant de borne de phase différentiel ($\Delta i_{fi,i}$) à partir de la soustraction du vecteur de courant de borne de phase ($i_{fi,i}$) et de la valeur de correction du courant ($i_0$) du vecteur de courant de borne de phase de référence ($i_{fi,i,\,réf}$),

**que** le dispositif de régulation (15) comprend un intégrateur (8) pour former la valeur de correction du courant ($i_0$) par intégration d'une valeur moyenne de la tension de borne de phase ($u_{inv,\,A}$) et un calculateur de valeur moyenne (7) pour former la valeur moyenne de la tension de borne de phase ($u_{inv,\,A}$) en déterminant la moyenne arithmétique des tensions de borne de phase ($u_{inv,\,iM}$) en prenant comme point de référence le point de connexion (M) des condensateurs du circuit accumulateur d'énergie (2).

10. Dispositif selon la revendication 9, **caractérisé en ce que** le dispositif de régulation (15) présente une deuxième unité de calcul (4) pour former le vecteur de flux de phase ($\psi_{g,\,\alpha\beta}$) à partir du vecteur de courant de borne de phase ($i_{fi,i}$), du signal de commande (S) et d'une valeur de tension continue actuelle ($u_{DC}$) du circuit accumulateur d'énergie (2).

11. Procédé selon la revendication 9 ou 10, **caractérisé en ce qu'**un filtre LCL ($L_{f,i}$, $C_{fi}$, $L_{fg,i}$) est raccordé à chaque borne de phase de l'unité de conversion (1), que le dispositif de régulation (15) présente un deuxième additionneur (13) pour former la valeur de puissance active différentielle ($P_{diff}$) à partir de la soustraction d'une valeur de puissance active d'atténuation ($P_d$) de la somme d'une valeur de puissance active de référence ($P_{réf}$) et d'au moins une valeur de puissance active d'oscillation harmonique de compensation ($P_h$) par rapport à l'oscillation de base du vecteur de courant de sortie de filtre ($i_{fg,i}$) du filtre LCL, le dispositif de régulation (15) présentant une troisième unité de calcul (9) pour former la valeur de puissance active d'atténuation ($P_d$) à partir d'une somme pondérée avec un facteur d'atténuation ($k_d$) réglable d'une multiplication d'une composante $\alpha$ de la transformation du pointeur de temps des courants de capacité de filtre ($i_{Cf\alpha}$) du filtre LCL par une composante $\alpha$ de la transformation du pointeur de temps ($i_{fi\alpha}$) des composantes du vecteur de courant de borne de phase ($i_{fi,i}$) et une multiplication d'une composante $\beta$ de la transformation du pointeur de temps des courants de capacité de filtre ($i_{Cf\beta}$) du filtre LCL par une composante $\beta$ de la transformation du pointeur de temps ($i_{fi\beta}$) des composantes du vecteur de courant de borne de phase ($i_{fi,i}$), que le dispositif de régulation (15) présente un troisième additionneur (14) pour former la valeur de puissance réactive différentielle ($Q_{diff}$) à partir de la soustraction de la somme d'une valeur de puissance réactive de référence ($Q_{réf}$) et d'au moins une valeur de puissance réactive d'oscillation harmonique de compensation ($Q_h$) par rapport à l'oscillation de base du vecteur de courant de sortie de filtre ($i_{fg,i}$) du filtre LCL, la troisième unité de calcul (9) servant en plus à former la valeur de puissance réactive d'atténuation ($Q_d$) à partir d'une différence pondérée avec le facteur d'atténuation ($k_d$) réglable d'une multiplication de la composante β de la transformation du pointeur de temps des courants de capacité de filtre ($i_{Cf\beta}$) du filtre LCL par la composante α de la transformation du pointeur de temps ($i_{fi\alpha}$) des composantes du vecteur de courant de borne de phase ($i_{fi,i}$) et une multiplication de la composante α de la transformation du pointeur de temps des courants de capacité de filtre ($i_{Cf\alpha}$) du filtre LCL par la composante β de la transformation du pointeur de temps ($i_{fi\beta}$) des composantes du vecteur de courant de borne de phase ($i_{fi,i}$).

**12.** Dispositif selon la revendication 11, **caractérisé en ce qu'**une valeur de puissance réactive de compensation ($Q_{comp}$) est en plus acheminée au troisième additionneur pour former la valeur de puissance réactive différentielle ($Q_{diff}$), la valeur de puissance réactive de compensation ($Q_{comp}$) étant formée par filtrage passe-bas d'une valeur de puissance réactive estimée de capacité de filtre ($Q_{Cf}$) au moyen d'un filtre passe-bas (12).

**13.** Procédé selon la revendication 12, **caractérisé en ce que** le dispositif de régulation (15) présente une quatrième unité de calcul (10) pour former la valeur de puissance réactive estimée de capacité de filtre ($Q_{Cf}$) à partir de la composante α de la transformation du pointeur de temps des courants de capacité de filtre ($i_{Cf\alpha}$), à partir de la composante β de la transformation du pointeur de temps des courants de capacité de filtre ($i_{Cf\beta}$), à partir d'un vecteur de flux de capacité de filtre estimé ($\psi_{Cf, \alpha\beta}$) et à partir de l'angle d'oscillation de base ($\omega t$) par rapport à l'oscillation de base du vecteur de courant de sortie de filtre ($i_{fg,i}$).

**14.** Procédé selon la revendication 12, **caractérisé en ce que** la deuxième unité de calcul (4) sert en plus à former le vecteur de flux de capacité de filtre estimé ($\psi_{Cf, \alpha\beta}$) à partir d'une valeur de tension continue actuelle ($u_{DC}$) du circuit accumulateur d'énergie (2), à partir du signal de commande (S), à partir de la composante α de la transformation du pointeur de temps ($i_{fi\alpha}$) des composantes du vecteur de courant de borne de phase ($i_{fi,i}$) et à partir de la composante β de la transformation du pointeur de temps ($i_{fi\beta}$) des composantes du vecteur de courant de borne de phase ($i_{fi,i}$).

**15.** Procédé selon l'une des revendications 11 à 14, **caractérisé en ce que** le dispositif de régulation (15) présente une cinquième unité de calcul (11) pour former la valeur de puissance active d'oscillation harmonique de compensation ($P_h$) et la valeur de puissance réactive d'oscillation harmonique de compensation ($Q_h$) respectivement à partir de la composante α de la transformation du pointeur de temps des courants de sortie de filtre ($i_{fg\alpha}$), à partir de la composante β de la transformation du pointeur de temps des courants de sortie de filtre ($i_{fg\beta}$), à partir d'une composante α de la transformation du pointeur de temps des flux de sortie de filtre ($\psi L_\alpha$), à partir d'une composante β de la transformation du pointeur de temps des flux de sortie de filtre ($\psi L_\beta$) et à partir de l'angle d'oscillation de base ($\omega t$) par rapport à l'oscillation de base du vecteur de courant de sortie de filtre ($i_{fg,i}$).

**16.** Procédé selon la revendication 9, **caractérisé en ce que** la valeur de puissance active différentielle ($P_{diff}$) correspond à une valeur de puissance active de référence ($P_{réf}$) qui peut être prédéfinie et que la valeur de puissance réactive différentielle ($Q_{diff}$) correspond à une valeur de puissance réactive de référence ($Q_{réf}$) qui peut être prédéfinie.

Stand der Technik

Fig. 1

EP 1 952 522 B1

**Fig. 2**

Fig. 3

Fig. 4

Fig. 5

Fig. 6